# EUROPEAN PATENT SPECIFICATION

(11) **EP 3 440 385 B1**
(45) Date of publication and mention of the grant of the patent: **29.12.2021**
(21) Application number: 16717860.7
(22) Date of filing: 07.04.2016
(51) Int. Cl.: F16H 61/00, F16H 57/04

(54) **HYBRID OIL PUMP**
HYBRIDÖLPUMPE
POMPE À HUILE HYBRIDE

(43) Date of publication of application: 13.02.2019
(73) Proprietor: Pierburg Pump Technology GmbH, 41460 Neuss (DE)
(72) Inventor: PARISI, Marco, 80123 Napoli (IT); DR. MALVASI, Alessandro, 57125 Livorno (IT)
(74) Representative: terpatent Patentanwälte ter Smitten Eberlein-Van Hoof Rütten Daubert
(86) International application number: PCT/EP2016/057556
(87) International publication number: WO 2017/174133

(56) References cited:
- EP-A1- 0 553 010
- DE-A1-102011 120 376
- US-A1- 2005 187 066
- US-A1- 2015 314 769

## Description

The present Invention refers to a hybrid oil pump for a vehicle comprising an engine for driving the vehicle, for example an internal combustion engine or an electrical engine.

A typical example for the use of a hybrid oil pump is to provide oil pressure even when the internal combustion engine is not running as for example is stopping for some seconds in a start/stop modus or is in a sailing modus. When the engine is stopped the pressurized oil is a.o. used for pre-lubrication of e.g. the bearings, for post-lubrication e.g. cooling and lubricating a turbine and for maintaining the oil pressure in other hydraulic devices, for example a hydraulic cam-phaser. Further, the pressurized oil is used for maintaining the oil pressure in the clutches of an automotive gearbox.

The hybrid oil pump comprises an oil pump unit for pumping pressurized oil to a vehicle component. The oil pump is provided with a mechanical drive for driving the oil pump unit in a mechanical driving mode, wherein the mechanical drive is mechanically connected to and driven by the engine. The oil pump is also provided with an electrical drive for driving the pump unit in an electrical driving mode when the engine is not rotating but the oil pump needs to be active.

US 2015/0314769 A1 discloses a hybrid oil pump which is driven either by an electric motor or alternatively by the traction engine. The motor clutch and the engine clutch are both either provided as freewheel clutches or as switchable clutches. A similar arrangement is disclosed in DE 10 2011 120 376 A1.

DE 69301664 T2 discloses a pump arrangement with a vacuum pump mechanically driven by a traction engine via a switchable clutch and, alternatively, by an electric motor via a freewheel clutch.

The object of the present invention is to provide a hybrid oil pump having a simple construction and an improved efficiency.

This object is solved with a hybrid oil pump having the features of claim 1.

The hybrid oil pump is provided with an oil pump unit for pumping pressurized oil to a vehicle component. A vehicle component in the meaning of the present invention is e.g. the gearbox, the internal combustion engine, the steering unit or heat exchangers. The pump is provided with a mechanical drive for driving the pump unit in a mechanical driving mode and with an electrical drive for driving the pump unit in an electrical driving mode. The mechanical drive is driven by the engine. This engine is preferably the internal combustion engine. The hybrid oil pump further is provided with a switchable clutch, which is mechanically arranged between a motor shaft of the electrical drive and a pump shaft of the oil pump unit. The switchable clutch mechanically disengages the electrical drive from the oil pump unit in the mechanical driving mode. The hybrid oil pump is provided with a freewheel clutch mechanically arranged between the mechanical drive and the electrical drive. The freewheel clutch according to the present invention is designed such that the mechanical drive is automatically coupled with the pump shaft of the pump unit when the rotational speed of the mechanical drive is higher than the rotational speed of the electric motor.

As the switchable clutch disengages the motor shaft of the electric motor from the pump shaft of the pumping unit during a mechanical driving mode, the electric motor is standing still in the driving mode. As a consequence, the electric motor is mechanically protected. Thereby, the efficiency of the hybrid oil pump is improved.

As the clutch is switchable the switching moment can be exactly determined.

The switchable clutch is a hydraulically actuated clutch. The fluid for hydraulically actuating the switchable pump is provided by the pump unit of the hybrid oil pump itself.

The hydraulic actuated switchable clutch is hydraulically connected to the pump unit. Accordingly, the pump unit supplies fluid to the vehicle component and to the hydraulic switchable clutch. Therefore, an additional hydraulic source for actuating the hydraulic clutch is not necessary, The hybrid oil pump has a simple construction and operates efficiently.

The hydraulically actuated switchable clutch is preferably a form-closure clutch. In a form-closure clutch the coupling elements are locked with each other by means of form-closure. Thereby, the transmission of high torque with a high reliability is realized. As the transmission of the force in the locked state is accomplished by form-closure only a low actuating force is necessary to engage or to disengage the clutch.

Alternatively, the switchable clutch is a friction clutch. The friction clutch allows a reliable operation of the clutch.

Preferably the mechanical drive comprises a pulley wheel, which is driven by a belt. According to an alternative embodiment the mechanical drive comprises, instead of the pulley wheel, a chain wheel, which is driven by a chain driven by the engine. A chain wheel allows a slip-free transmission.

A driving arrangement is provided, which preferably comprises the freewheel clutch and the pulley wheel. The freewheel clutch forms a hub of the pulley wheel. The inner race of the freewheel clutch is mechanically connected to the pump shaft. As the freewheel clutch and the pulley wheel are provided as a single functional unit no further axial space is needed to accommodate the freewheel clutch. Accordingly, the required space for the mechanical drive can be reduced.

Preferably a driving arrangement is provided comprising the freewheel clutch and the chain wheel. The freewheel clutch forms a hub of the chain wheel. The inner race of the freewheel clutch is mechanically connected to the pump shaft. The driving arrangement comprising the chain wheel is very compact.

Preferably, the motor-rotor of the electric motor is permanently magnetized. An electric motor with a permanently magnetized motor-rotor operates very efficient. But this motor type generates a magnetic resistance torque when the motor-rotor is dragged in a non-operating state of the electric motor. Using the aforesaid electric motor type in the hybrid oil pump allows disengaging the electric motor to thereby avoid any dragging torque when the oil pump is driven mechanically. The very efficient electric motor type with a permanently magnetized motor-rotor can be used, without having the disadvantage of a dragging torque in the mechanical driving mode.

According to a preferred embodiment of the present invention the freewheel clutch comprises an outer race having at its inner circumferential surface sawtooth depressions. The freewheel clutch further comprises an inner race, which is provided within the outer race, so as to be rotatable in one rotational direction with respect to the outer race. The inner race comprises at least one, preferably four pawls, extending an outer circumferential surface thereof. The pawl thereby is provided such that the pawl interacts with the sawtooth depressions so as to block one rotational direction of the inner race with respect to the outer race.

According to a further preferred embodiment the pawl is mechanically preloaded in a radial direction via a spring so that one end of the pawl is in permanent contact with the sawtooth depressions so as to block one rotational direction of the inner race with respect to the outer race. The spring is preferably a spiral spring or a leaf spring. A leaf spring is cheap. In a further preferred embodiment the pawl itself can be made out of a resilient material.

The freewheel clutch with the arrangement of the pawls extending the inner race is fail-safe. In case of a failure of the springs preloading the free ends of the pawls in a radial direction the free ends will be forced in the direction to the sawtooth depressions by centrifugal force generated during rotation of the inner race. When the internal combustion engine restarts again, the rotational speed of the outer race becomes faster than the rotational speed of the inner race. As the free ends of the pawls are in contact with the sawtooth depressions due to centrifugal force, the other rotational direction of the inner race relative to the outer race is blocked. Accordingly, the inner race co-rotates with the outer race. When the inner race co-rotates with the outer race the free ends of the pawls lock with the respective sawtooth depressions. By co-rotating the inner race with the outer race the free ends still will be forced in the direction to the sawtooth depressions by the centrifugal force generated by the co-rotation of the inner race. The electrical drive can be switched off.

The following is a detailed description of an embodiment of the invention with reference to the drawings, wherein:
Figure 1 shows a schematic drawing of an arrangement comprising an internal combustion engine and a hybrid oil pump according to an embodiment of the present invention,
Figure 2 shows a cross section of a first embodiment of a freewheel clutch of the hybrid oil pump of Figure 1, and
Figure 3 shows a cross section of a second embodiment of a freewheel clutch.

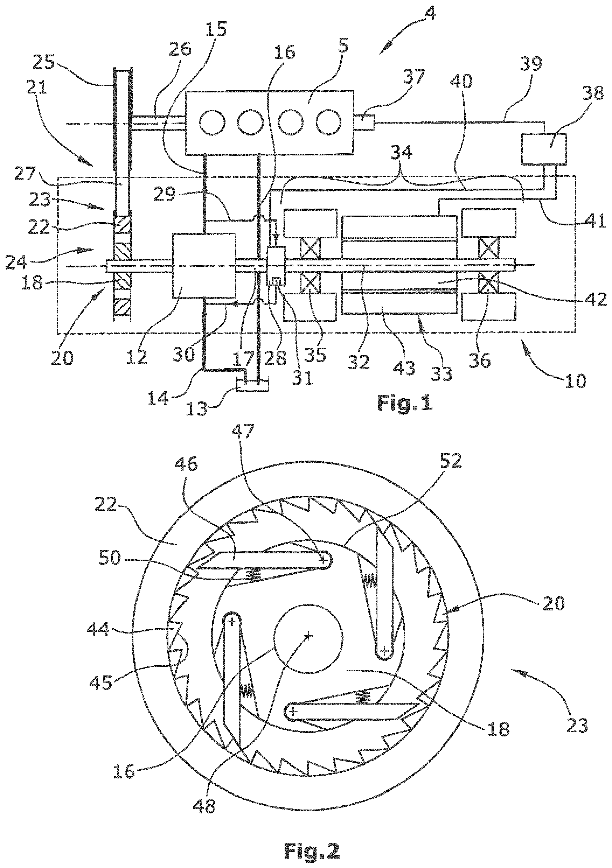

Figure 1 shows a schematic representation of an arrangement 4 comprising a vehicle driving engine 5 and a hybrid oil pump 10. According to the described embodiment the engine 5 is exemplarily an internal combustion engine. The hybrid oil pump 10 comprises an oil pump unit 12, which pumps oil from an oil sink 13 to a vehicle component via an oil sink conduit 14 and an oil delivery conduit 15. The vehicle component according to the described embodiment is exemplarily the internal combustion engine 5. The oil from the internal combustion engine 5 is discharged to the oil sink 13 by an oil discharge conduit 16.

A pump rotor of the pump unit 12 is mechanically fixed to a pump shaft 17. One axial end of the pump shaft 17 is fixed to an inner race 18 of a freewheel clutch 20 of a driving arrangement 21. The freewheel clutch 20 further comprises an outer race 22, which is also defining a pulley wheel 23. The inner race 18 is provided radially within the outer race 22, so as to be rotatable in one rotational direction relative to the outer race 22. In the other relative rotational direction the outer race 22 blocks a relative rotation of the inner race 18 so that the inner race 18 co-rotates with the outer race 22.

The internal combustion engine 5 mechanically drives a mechanical drive 24. The mechanical drive 24 comprises the pulley wheel 23, and is driven by an engine driving wheel 25, which is driven by the internal combustion engine 5 via an engine shaft 26. The engine driving wheel 25 is mechanically connected to the pulley wheel 23 via a belt 27. The pump unit 12 therefore is mechanically connected and driven by the internal combustion engine 5.

The other axial end of the pump shaft 17 is mechanically connected to a hydraulically switchable clutch 28. A typical example of a hydraulically switchable clutch 28 is disclosed in WO 2015/090416 A1. The description of the respective hydraulic clutch disclosed on page 6 line 19 to page 10 line 13 of the application document WO 2015/090416 A1 and the respective figures show an embodiment of the hydraulically actuated switchable clutch.

The hydraulic switchable clutch 28 is connected to the pump unit 12 via a clutch actuation conduit 29 and a clutch discharge conduit 30 for providing actuation pressure from the pump unit 12 so as to hydraulically actuate the switchable clutch 28. The switchable clutch 28 is provided with a valve 31 for fluidically connecting or disconnecting the clutch actuation conduit 29 to the clutch discharge conduit 30. By opening the valve 31 and thereby connecting the clutch actuation conduit 29 to the clutch discharge conduit 30 the switchable clutch 28 is switched into a non-actuated state. In the non-actuated state of the switchable clutch 28, a spring (not shown), provided in the switchable clutch 28, acts on engaging parts (not shown) of the switchable clutch 28 so as to bring the switchable clutch 28 into an engaged state. In the engaged state the switchable clutch 28 mechanically engages the pump shaft 17 to a motor shaft 32 of an electric motor 33 being part of an electrical drive 34 of the hybrid oil pump 10. The pump unit 12 thereby is mechanically drivable by the electrical drive 34 in an electric driving modus, in which the switchable clutch 28 is engaged.

By closing the valve 31 and thereby disconnecting the clutch actuation conduit 29 to the clutch discharge conduit 30 the switchable clutch 28 is in an actuated state. In the actuated state the pressure of the pump unit 12 acts against the spring force so that the engaging parts are shifted into a disengaged position. In the disengaged state the switchable clutch 28 mechanically disengages the pump shaft 17 from the motor shaft 32.

As the switchable clutch 28 is engaged in a non-actuated state, the arrangement with the switchable clutch 28 is fail-safe. In case of a failure of the valve 31 the switchable clutch 28 returns or remains in an engaged state in which the electrical drive 34 is permanently co-rotating.

The electrical drive 34 further comprises bearings 35, 36 supporting the motor shaft 32.

When the internal combustion engine 5 is in a stop mode, namely not rotating, the oil pump unit 12 is not further mechanically driven by the non-rotating mechanical drive. A temperature sensor 37 detects the temperature of the internal combustion engine 5 and forwards the temperature signal to an electronic control device 38 via an electric signal line 39. If the temperature exceeds a predetermined value, the electronic control device 38, which is also connected to the hydraulic switchable clutch 28 via a clutch signal line 40, activates the coupling process so that the hydraulic switchable clutch 28 switches to a coupled condition. Additionally, the control device 38 can be connected with a rotation speed signal of a speed sensor detecting the rotation speed of the engine 5, the pulley wheel 23 or the engine driving wheel 25.

The electronic control device 38 starts the electric motor 33 by sending an electric signal via an electric motor signal line 41 connected to the electric motor 33. The electric motor 33 then drives the oil pump unit 12 so that pressurized oil is forwarded to the internal combustion engine 5 and the temperature of the internal combustion engine 5 is decreased. The inner race 18 then rotates with respect to the outer race 22 in a direction which is not blocked, When the internal combustion engine 5 restarts again, the rotational speed of the outer race 22 becomes faster than the rotational speed of the inner race 18. As the other rotational direction of the inner race 18 relative to the outer race 22 is blocked, the inner race 18 co-rotates with the outer race 22. If no combustion engine 5 lubrication, respectively cooling, is needed or if the combustion engine 5 is running, the electronic control device 38 actuates the hydraulic switchable clutch 28. Thereby, the hydraulic switchable clutch 28 switches to a non-coupled condition in which the motor shaft 32 is not coupled to the pump shaft 17. Further, the electronic control device 38 stops the energizing of the electric motor 33. A motor-rotor 42 of the electric motor 33 therefore is not co-rotating with the pump shaft 17 so that no magnetic losses are generated.

Figure 2 shows a cross section of a first embodiment of a freewheel clutch 20 with the outer race 22 having sawtooth depressions 44 at its inner circumferential surface 45. In this embodiment of the present invention, the outer race 22 is mechanically fixed at the pulley wheel 23.

The inner race 18 is arranged within outer race 22. The inner race 18 thereby is rotatable provided in one direction with respect to the outer race 22. The inner race 18 comprises four pawls 46, which first ends are fixed at the inner race 18 so as to allow a rotation around a rotation axis 47 parallel to a rotation axis 48 of the inner race 18. The pawls 46 are preloaded by a spiral spring 50 in a radial outward direction so that the pawls 46 extend outwardly from an outer circumferential surface 52 of the inner race 18. The pawls 46 are preloaded such so as to be in permanent contact with the sawtooth depressions 44 of the outer race 22.

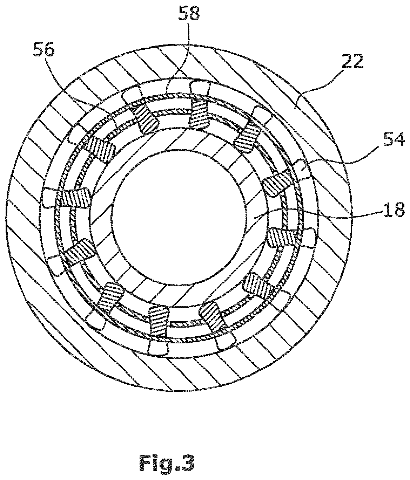

Figure 3 shows a cross section of a second embodiment of a freewheel clutch 20 providing a plurality of sprag portions 54 arranged between the inner race 18 and the outer race 22. The sprag portions 54 are tiltable provided in a cage 56 so as to allow a relative rotation of the inner race 18 with respect to the outer race 22 in one rotational direction and block the other rotational direction, A spring ring 58 pretensions the sprag portions 54 to a radial inner direction.

The present invention is not limited to the above described embodiment. In particular, instead of the internal combustion engine an electrical engine can be used to drive the mechanical drive. Further, instead of the internal combustion engine, the oil pump unit also can pump pressurized oil to vehicle components such as e.g. the transmission, the gearbox, the steering unit or heat exchangers.

### Reference signs

- 4: arrangement
- 5: engine
- 10: hybrid oil pump
- 12: pump unit
- 13: oil sink
- 14: oil sink conduit
- 15: oil delivery conduit
- 16: oil discharge conduit
- 17: pump shaft
- 18: inner race
- 20: freewheel clutch
- 21: driving arrangement
- 22: outer race
- 23: pulley wheel
- 24: mechanical drive
- 25: engine driving wheel
- 26: engine shaft
- 27: belt
- 28: switchable clutch
- 29: clutch actuation conduit
- 30: clutch discharge conduit
- 31: valve
- 32: motor shaft
- 33: electric motor
- 34: electrical drive
- 35: bearing
- 36: bearing
- 37: temperature sensor
- 38: electronic control device
- 39: electric signal line
- 40: clutch signal line
- 41: electric motor signal line
- 42: motor-rotor
- 43: stator coil
- 44: sawtooth depression
- 45: inner circumferential surface
- 46: pawl
- 47: rotation axis pawl
- 48: rotation axis
- 50: spiral spring
- 52: outer circumferential surface
- 54: sprag portions
- 56: cage
- 58: spring ring

## Claims

1. A hybrid oil pump (10) for a vehicle comprising an engine (5), wherein the hybrid oil pump (10) comprises:
- an oil pump unit (12) for pumping pressurized oil to a vehicle component,
- a mechanical drive (24) for driving the oil pump unit (12) in a mechanical driving mode, wherein the mechanical drive (24) is mechanically connectable to and drivable by the engine (5),
- an electrical drive (34) for driving the oil pump unit (12) in an electrical driving mode, wherein the electrical drive (34) comprises an electric motor (33),
- a switchable clutch (28) arranged between a motor shaft (32) of the electrical drive (34) and a pump shaft (17) of the oil pump unit (12), wherein the switchable clutch (28) mechanically disengages the electrical drive (34) from the oil pump unit (12) in the mechanical driving mode, and
- a freewheel clutch (20), which automatically couples the mechanical drive (24) with the pump shaft (17) when the rotational speed of the mechanical drive (24) is higher than the rotational speed of the electric motor (33),
- **characterised in that** the switchable clutch (28) is a hydraulically actuated clutch, and
- **in that** the hydraulically actuated switchable clutch (28) is hydraulically connected to the pump unit (12) for actuating the hydraulically actuated clutch (28).

2. The hybrid oil pump (10) according to claim 1, wherein the hydraulically switchable actuated clutch (28) is a form-closure clutch.

3. The hybrid oil pump (10) according to claim 1, wherein the switchable clutch (28) is a friction clutch.

4. The hybrid oil pump (10) according to one of the preceding claims, wherein the mechanical drive (24) comprises a chain wheel, which is driven by a chain.

5. The hybrid oil pump (10) according to claim 4, wherein a driving arrangement (21) is provided comprising the freewheel clutch (20) and the chain wheel.

6. The hybrid oil pump (10) according to one of the claims 1 to 3 or 5, wherein the mechanical drive (24) comprises a pulley wheel (23), which is driven by a belt (27).

7. The hybrid oil pump (10) according to claim 6, wherein a driving arrangement (21) is provided comprising the freewheel clutch (20) and the pulley wheel (23).

8. The hybrid oil pump (10) according to one of the preceding claims, wherein a motor-rotor (42) of the electric motor (33) is permanently magnetized.

## Patentansprüche

1. Hybrid-Ölpumpe (10) für ein Fahrzeug mit einem Motor (5), wobei die Hybrid-Ölpumpe (10) aufweist:
- eine Ölpumpeneinheit (12) zum Pumpen von druckbeaufschlagtem Öl zu einem Fahrzeugbauteil,
- einen mechanischen Antrieb (24) zum Antreiben der Ölpumpeneinheit (12) in einem mechanischen Antriebsmodus, wobei der mechanische Antrieb (24) mit dem Motor (5) mechanisch verbindbar und von diesem antreibbar ist,
- einen elektrischen Antrieb (34) zum Antreiben der Ölpumpeneinheit (12) in einem elektrischen Antriebsmodus, wobei der elektrische Antrieb (34) einen Elektromotor (33) aufweist,
- eine schaltbare Kupplung (28), welche zwischen einer Motorwelle (32) des elektrischen Antriebs (34) und einer Pumpenwelle (17) der Ölpumpeneinheit (12) angeordnet ist, wobei die schaltbare Kupplung (28) den elektrischen Antrieb (34) im mechanischen Antriebsmodus mechanisch von der Ölpumpeneinheit (12) trennt, und
- eine Freilaufkupplung (20), die den mechanischen Antrieb (24) automatisch mit der Pumpenwelle (17) verbindet, die Drehzahl des mechanischen Antriebs (24) höher als die Drehzahl des Elektromotors (33) ist,
**dadurch gekennzeichnet, dass**
die schaltbare Kupplung (28) eine hydraulisch betätigte Kupplung ist, und
dass die hydraulisch betätigte schaltbare Kupplung (28) hydraulisch mit der Pumpeneinheit verbunden wird, um die hydraulisch betätigte Kupplung (28) zu betätigen.

2. Hybrid-Ölpumpe (10) nach Anspruch 1, bei welcher die hydraulisch betätigte Kupplung (28) eine formschlüssige Kupplung ist.

3. Hybrid-Ölpumpe (10) nach Anspruch 1, bei welcher die schaltbare Kupplung (28) eine Reibungskupplung ist.

4. Hybrid-Ölpumpe (10) nach einem der vorangehenden Ansprüche, bei welcher der mechanische Antrieb (24) ein Kettenrad aufweist, das von einer Kette angetrieben wird.

5. Hybrid-Ölpumpe (10) nach Anspruch 4, bei welcher eine Antriebsanordnung (21) vorgesehen ist, welche die Freilaufkupplung (20) und das Kettenrad aufweist.

6. Hybrid-Ölpumpe (10) nach einem der Ansprüche 1 bis 3 oder 5, bei welcher der mechanische Antrieb (24) eine Riemenscheibe (23) aufweist, die von einem Riemen (27) angetrieben wird.

7. Hybrid-Ölpumpe (10) nach Anspruch 6, bei welcher eine Antriebsanordnung (21) vorgesehen ist, welche die die Freilaufkupplung (20) und die Riemenscheibe (23) aufweist.

8. Hybrid-Ölpumpe (10) nach einem der vorangehenden Ansprüche, bei welcher eine Motorpumpe (42) des Elektromotor (33) permanent magnetisiert ist.

## Revendications

1. Pompe à huile hydride (10) pour un véhicule avec un moteur (5), dans laquelle la pompe à huile hydride (10) comprend:
- une unité de pompe à huile (12) pour pomper de l'huile sous pression vers un composant dudit véhicule,
- un entrainement (24) mécanique pour l'entrainement de ladite unité de pompe à huile (12) dans un mode d'entrainement mécanique, l'entrainement (24) mécanique pouvant être relié mécaniquement par ledit moteur (5) et entrainé par celui-ci,
- un entrainement (34) électrique pour l'entrainement de ladite unité de pompe à huile (12) dans un mode d'entrainement électrique, l'entrainement (34) électrique comprenant un moteur électrique (33),
- un embrayage (28) commutable disposé entre un arbre de moteur (32) dudit entrainement (34) électrique et un arbre de pompe (17) de ladite unité de pompe à huile (12), l'embrayage (28) commutable désengageant mécaniquement ledit entrainement (34) électrique de ladite unité de pompe à huile (12) dans le mode d'entrainement mécanique,
- un embrayage à roue libre (20) automatiquement couplant l'entrainement (24) mécanique avec ledit arbre de pompe (17) lorsque la vitesse de rotation de l'entrainement (24) mécanique est supérieure à la vitesse de rotation du moteur électrique (33),
**caractérisée en ce que**
- ledit embrayage (28) commutable est un embrayage actionné hydrauliquement, et
- que ledit embrayage (28) commutable actionné hydrauliquement est relié hydrauliquement à unité de pompe à huile (12) pour actionner ledit embrayage (28) actionné hydrauliquement.

2. Pompe à huile hydride (10) selon la revendication 1, dans laquelle ledit embrayage (28) commutable actionné hydrauliquement est un embrayage à engagement positif.

3. Pompe à huile hydride (10) selon la revendication 1, dans laquelle ledit embrayage (28) commutable est un embrayage à friction.

4. Pompe à huile hydride (10) selon l'une quelconque des revendications précédentes, dans laquelle ledit entrainement (24) mécanique comprend un pignon entrainé par une chaine.

5. Pompe à huile hydride (10) selon la revendication 4, dans laquelle un ensemble d'entrainement (21) est prévu comprenant l'embrayage à roue libre (20) et le pignon.

6. Pompe à huile hydride (10) selon les revendications 1 à 3 or 5, dans laquelle ledit entrainement (24) mécanique comprend une poulie (23) entrainée par une courroie (27).

7. Pompe à huile hydride (10) selon la revendication 6, dans laquelle un ensemble d'entrainement (21) est prévu comprenant l'embrayage à roue libre (20) et la poulie (23).

8. Pompe à huile hydride (10) selon l'une quelconque des revendications précédentes, dans laquelle un rotor de moteur (42) dudit moteur électrique (33) est magnétisé en permanence.
